# EUROPÄISCHE PATENTSCHRIFT

(11) **EP 2 389 521 B1**
(45) Veröffentlichungstag und Bekanntmachung des Hinweises auf die Patenterteilung: **20.08.2014**
(21) Anmeldenummer: 10712874.6
(22) Anmeldetag: 20.01.2010
(51) Int. Cl.: F16C 32/06

(54) **ULTRASCHALLLUFTLAGER**
SQUEEZE AIR BEARING
PALIER AVEC OSCILLATEUR À ULTRASONS

(30) Priorität: 20.01.2009 DE 102009005559
(43) Veröffentlichungstag der Anmeldung: 30.11.2011
(73) Patentinhaber: ZS-Handling GmbH, 93055 Regensburg (DE)
(72) Erfinder: SCHILP, Michael, 93047 Regensburg (DE); ZIMMERMANN, Josef, 93047 Regensburg (DE); ZITZMANN, Adolf, 92552 Teunz (DE)
(74) Vertreter: Staudte, Ralph
(86) Internationale Anmeldenummer: PCT/DE2010/000056
(87) Internationale Veröffentlichungsnummer: WO 2010/083813

(56) Entgegenhaltungen:
- JP-A- 1 203 714
- JP-A- 1 210 614
- JP-A- 62 255 613
- JP-A- 2007 321 811
- US-A- 4 630 941
- US-A- 5 810 155

## Beschreibung

Die vorliegende Erfindung bezieht sich auf eine Lagerkonstruktion, um Bauteile zu lagern und/oder zu führen, wobei nachfolgend nur noch der Begriff "lagern" verwendet wird.

Lagerkonstruktionen sind in verschiedene Kategorien unterteilbar. Es gibt z. B. Kugellager und Gleitlager, die auf einem Ölfilm laufen. Wellen und Spindeln oder Schlitten mit Hilfe von Luftlagern berührungslos zu lagern, ist dem Fachmann ebenfalls bekannt.

An Lager werden die unterschiedlichsten Anforderungen gestellt, wie z. B. das Vermögen, hohe Kräfte aufzunehmen oder einen geringen Verschleiß zu haben.

Luftlager laufen nahezu verschleißfrei. Ein Luftlager besteht aus wenigstens zwei Bauelementen, die berührungslos aufeinander gleiten. Um die Berührung der Bauelemente zu verhindern, weist eine Bauelementefläche Löcher auf, aus denen Luft austritt. Luftlager dieser Bauart weisen jedoch verschiedene Nachteile auf: Ein Nachteil ist die geringe Steifigkeit, sodass bei wechselnder Belastung Lager dieses Typs zum Schwingen neigen, was jedoch mittels bestimmter Lagerformen und -bauweisen z. T. vermieden werden kann. Ebenfalls ist bekannt, statt eines Luftlagers, bei dem Luft zugeführt werden muss, ein Ultraschallluftlager, in der Literatur auch als Squeezefilmlager bekannt, einzusetzen. Eine derartige Vorrichtung ist z.B. aus dem Dokument US 4666315A bekannt. Es wird ein Lager beschrieben, bei dem Piezoplättchen zum Schwingen angeregt werden. Die Schwingungen der Piezoplättchen erzeugen zwischen der Oberfläche der Piezoplättchen und einer Gegenfläche den Luftfilm. Diese Konstruktion kann z. B. zur Lagerung von PC-Festplatten eingesetzt werden. Für größere und/oder höher belastete Bauteile sind diese Konstruktionen kaum geeignet, da die erzielbaren Amplituden mittels der Piezoplättchen sehr klein sind.

Weiterhin wird zum Beispiel in dem Dokument DE 19904420 ein Squeezefilmlager mit einem selbsterregten Luftlager kombiniert, wobei das Squeezefilmlager als "Startvorrichtung" verwendet wird, weil das selbsterregende Luftlager in der Startphase noch keinen Luftfilm aufweist, da der Luftfilm bei einem selbsterregenden Luftlager erst durch die Bewegung erzeugt wird. Dieses Lager kann daher in der Startphase keine großen Kräfte aufnehmen.

In dem Dokument JP 2007 321811 A ist ein Squeezefilmlager mit piezoelektrischen Elementen und einer Sonotrode gezeigt. Die piezoelektrischen Elemente sind zwischen einer axialen Endfläche der Sonotrode und einem Metallblock angeordnet. Durch sie wird die Sonotrode derart zu Schwingungen angeregt, dass zwischen der Sonotrode und einem sich um sie drehenden Objekt ein Luftfilm erzeugt und eine berührungslose Lagerung bewirkt wird.

Ein ähnliches Sqeezefilmlager mit hohler Achse ist aus JP 1203714 A bekannt.

Bei schnelldrehenden hochbelasteten Maschinen, wie z. B. kleinen Turbinen, Turboladern von Fahrzeugen, Kompressoren und Motoren entstehen hohe und z. T. stark schwankende Lagerkräfte, da diese Maschinen und Geräte oft im diskontinuierlichen Betrieb arbeiten. Daher sind konventionelle Luftlager aufgrund ihrer Schwingungsneigung nicht geeignet und Ultraschalllager mit Piezoplättchen können die hohen Kräfte nicht aufnehmen.

Bisher war es demnach erforderlich, Kugellager oder mit Öl geschmierte Gleitlager einzusetzen, wenn höhere Lagerkräfte anliegen.

Kugellager oder mit Öl geschmierte Gleitlager haben jedoch verschiedene, dem Fachmann bekannte Nachteile, wie z. B. ein begrenzter Temperaturbereich, innerhalb dessen das Lager betrieben werden kann. Ebenso müssen solche Lager gekapselt sein, damit bestimmte aggressive Medien, die das Lager beschädigen würden, vom Lager ferngehalten werden. Außerdem unterliegen solche Lager einem Verschleiß und müssen in vorbestimmten Zeitintervallen ausgetauscht werden.

Es ist daher die Aufgabe der Erfindung, die vorstehend aufgeführten Nachteile des Standes der Technik zu beseitigen und ein robustes Lager für höhere Belastungen bereitzustellen, welches auch in stark schwankenden und höheren Temperaturbereichen betrieben werden kann. Außerdem soll das Lager möglichst verschleißfrei sein.

Diese Aufgabe wird mit einer Lagerkonstruktion nach dem Anspruch 1 gelöst.

Die Lagerkonstruktion nach Anspruch 1 weist eine Achse auf, auf welcher ein Rotor um die Achse drehbar angeordnet ist und ein Ultraschallschwinger zur Erzeugung eines Luft- oder Gasfilms vorgesehen ist, sodass ein berührungsloses Lager ausgebildet ist. Der Ultraschallschwinger ist axial an der Achse angekoppelt. Die Lagerkonstruktion und der Ultraschallschwinger sind so ausgebildet, dass wenigstens der tragende Abschnitt der Achse, auf welchem der Rotor dreht, schwingt, sodass sich zwischen der Rotor-Lagerfläche und der Achsenlagerfläche der Luft- oder Gasfilm ausbildet, der die Lagerkräfte aufnimmt und die berührungslose Lagerung bewirkt. Die Achse ist hohl und weist eine Bohrung mit unterschiedlichen und/oder abgestuften Innendurchmessern auf.

Es ist nicht möglich, spezielle Angaben zu machen, wie das Lager zu dimensionieren ist, da die Dimensionierung von vielen Randbedingungen abhängt. Es ist dem Fachmann jedoch klar, wie er mittels der mitgeteilten technischen Lehre der axialen Ankopplung eine solche Konstruktion auszuführen hat, damit sich der tragende Luft- oder Gasfilm ausbildet, d. h. wenn das Lager in normaler Atmosphäre betrieben wird, bildet sich ein Luftfilm aus, wenn das Lager z. B. in einem bestimmten Schutzgas betrieben wird, bildet sich ein Film aus diesem Schutzgas aus.

Der Vorteil der Erfindung besteht darin, dass diese Lagerkonstruktion wesentlich größere Lagerkräfte aufnehmen kann als bisher bekannte Luftlager auf der Basis der Piezoplättchen. Das erfindungsgemäße Lager weißt auch gegenüber herkömmlichen Luftlagern eine höhere Steifigkeit auf. Weiterhin kann diese Lagerkonstruktion auch bei höheren Temperaturen eingesetzt werden, bei denen z. B. mit Öl geschmierte Gleitlager nicht mehr einsetzbar sind.

Bei der Lagerkonstruktion nach Anspruch 2 ist die Achse geschlitzt.

Bei der Lagerkonstruktion nach Anspruch 3 ist die Achse zylindrisch ausgebildet und der Rotor weist eine dazu passende Bohrung auf. Bei dieser Ausführungsform der Erfindung muss der Rotor seitlich abgestützt werden, damit er nicht weggleitet.

Bei der Lagerkonstruktion nach Anspruch 4 ist die Achse kegelförmig ausgebildet und der Rotor weist einen dazu passenden Innenkegel auf. Bei dieser Ausführungsform der Erfindung muss der Rotor nicht abgestützt werden, da er sich selbst zentriert.

Bei der Lagerkonstruktion nach Anspruch 5, die eine Weiterbildung des Gegenstandes nach Anspruch 3 ist, wird der Rotor mittels eines seitlichen Anschlags, der mit der Achse verbunden ist, geführt oder abgestützt, wodurch demzufolge dieser Anschlag ebenfalls schwingt und mit der Seitenfläche des Rotors ein berührungsfreies Lager bildet. Diese Lagerkonstruktion ist eine besonders bevorzugte Ausführungsform der Erfindung. Es ist dem Fachmann klar, dass für ein komplettes Lager mitunter zwei oder mehr derartige Konstruktionen eingesetzt werden müssen.

Es ist ebenfalls klar, dass die technische Lehre der axialen Ankopplung eines Ultraschallgebers in vielfältigen Variationen und Kombinationen anwendbar ist.

Die Erfindung wird nachfolgend anhand von Zeichnungen näher erläutert, wobei die abgebildeten Lagerkonstruktionen nicht alle Merkmale des Anspruchs 1 zeigen.
- Fig. 1: zeigt eine erste Ausbildungsform einer Achse der Lagerkonstruktion.
- Fig. 2: zeigt eine zweite Ausbildungsform der Achse der Lagerkonstruktion.
- Fig. 3: zeigt eine dritte Ausbildungsform der Achse der Lagerkonstruktion.
- Fig. 4: zeigt eine Achse nach Fig. 1 mit einem Rotor.
- Fig. 5: zeigt eine kegelförmige Lagerkonstruktion.
- Fig. 6: zeigt eine Führungsschiene mit einem Schlitten.

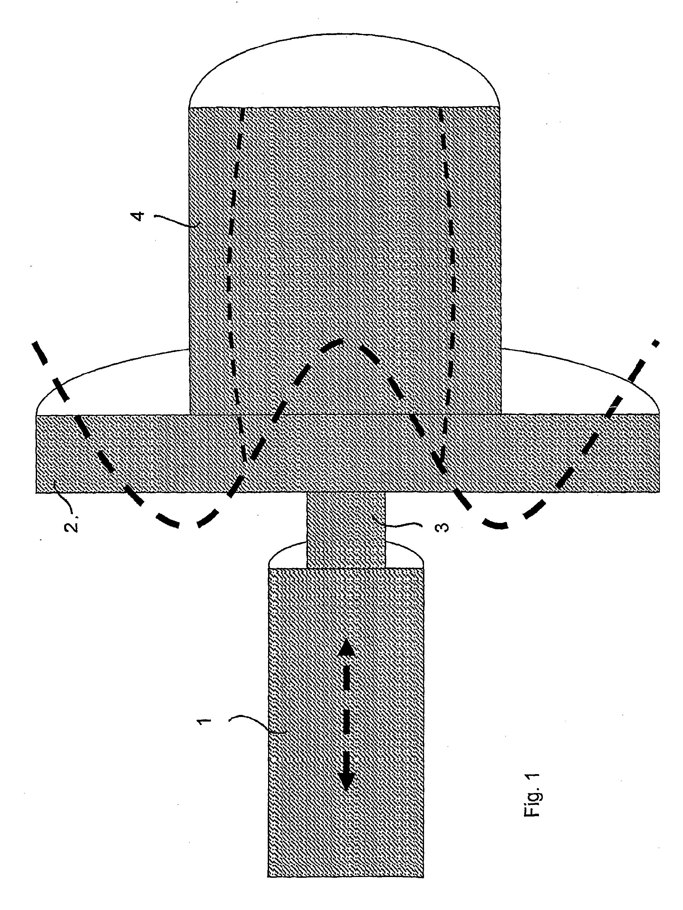

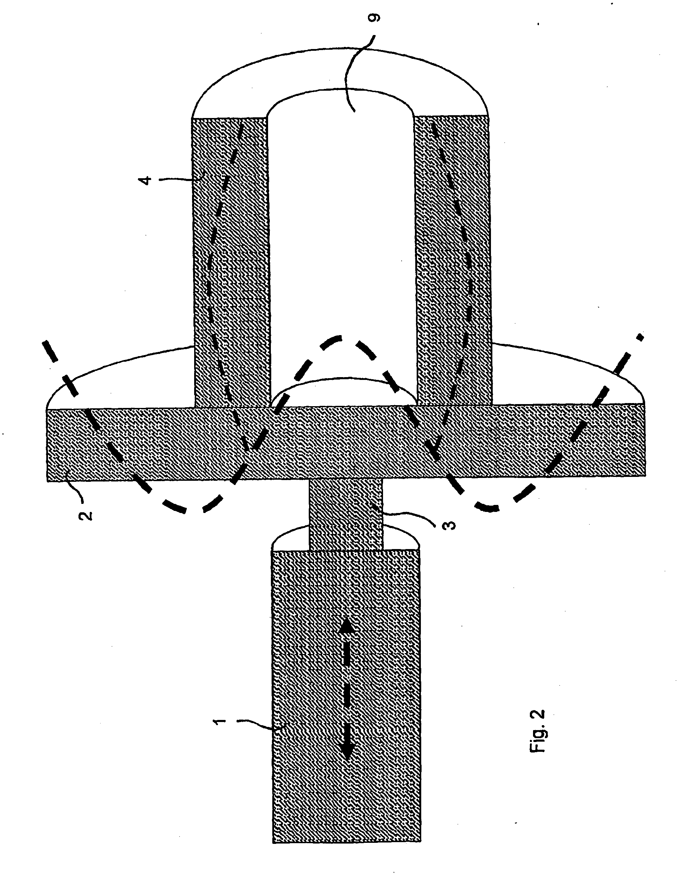

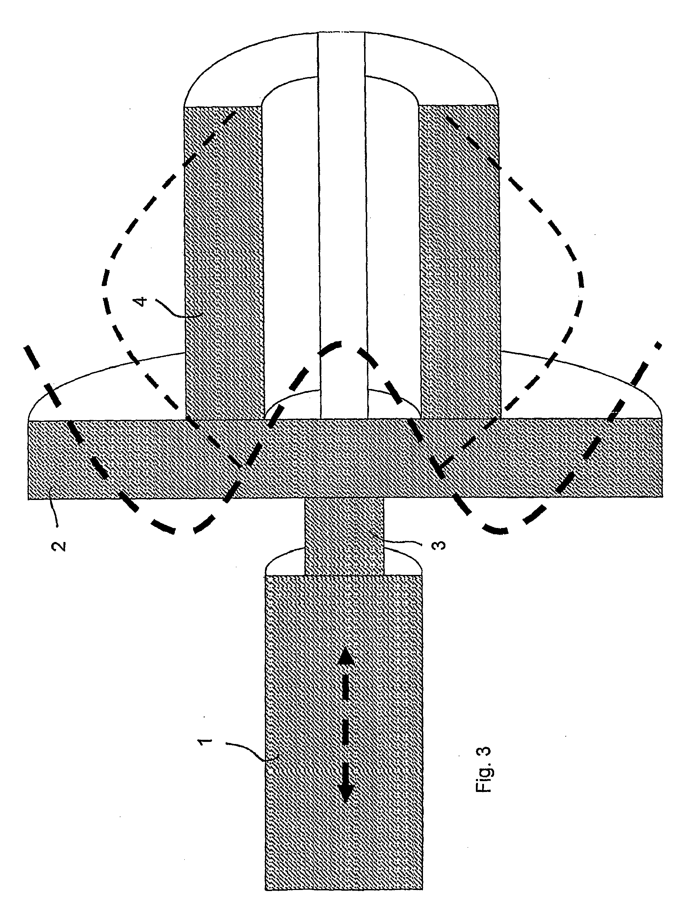

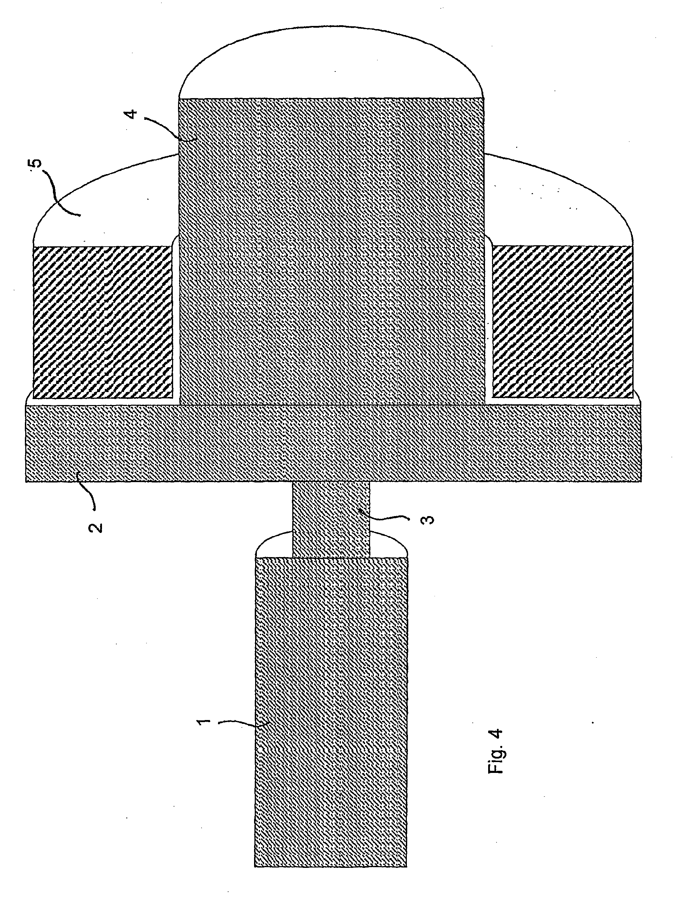

Die Fig. 4 zeigt einen ringförmigen Rotor 5, der auf einer Achse 4 drehbar gelagert ist. Diese Achse 4 wird axial mit einem Ultraschallschwinger 1 so angeregt, dass sich auf der Oberfläche der Achse 4 solche Schwingungen ausbilden, die im Zusammenwirken mit der Innenfläche des ringförmigen Rotors 5 ein Squeezefilmlager ausbilden. Das Schwingungsverhalten der Achse 4 kann durch nachfolgende Maßnahmen beeinflusst werden, um die Trage- und Laufeigenschaften des Lagers zu verändern. Die Achse 4 ist nach der Erfindung gemäß Fig. 2 hohl und kann gemäß Fig. 3 zusätzlich geschlitzt sein. Der Doppelpfeil auf dem Ultraschallschwinger 1 zeigt die Schwingungsrichtung an. Die gestrichelten Linien in den Figuren 1 bis 3 zeigen das unterschiedliche Schwingungsverhalten der Achse 4, welches mittels der unterschiedlichen Form der Achse 4 bewirkt wird. Die Anregung der Achse 4 kann mittels eines Boosterhorns 3 verstärkt werden. Erfindungsgemäß weist die Hohlachse auch eine Bohrung 9 mit unterschiedlichen und/oder abgestuften Innendurchmessern auf.

Mittels einer seitlichen Abstützscheibe 2, die ebenfalls schwingt, wird eine besonders einfache und bevorzugte Lagerkonstruktion gebildet, da zur Erzeugung des seitlichen Squeezefilmlagers kein zusätzlicher Ultraschallschwinger erforderlich ist.

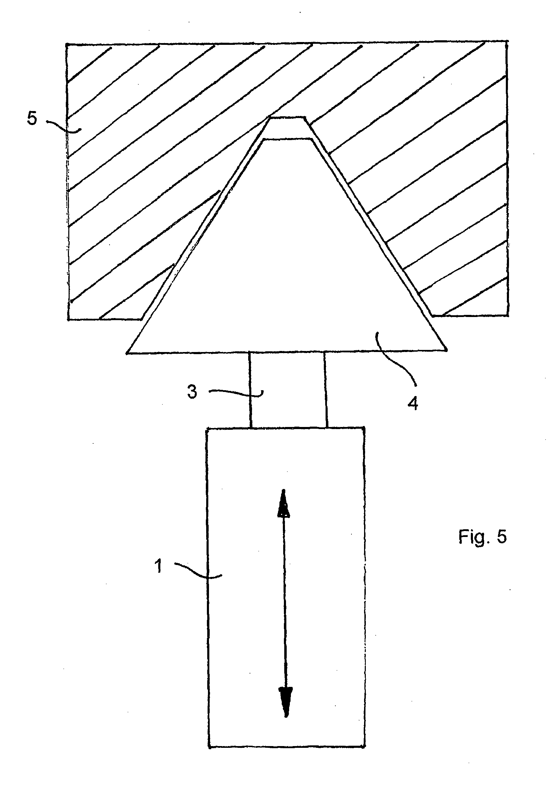

Die Fig. 5 zeigt eine kegelförmige Lagerkonstruktion, bei welcher der Rotor 5 einen Innenkegel aufweist, der zu einem Außenkegel 4 passt, wobei dieser Außenkegel 4 mit dem Ultraschallschwinger 1 gekoppelt ist. Der Vorteil dieser Ausführungsform der Erfindung besteht darin, dass sich der Rotor 5 auf dem Außenkegel 4 selbst zentriert.

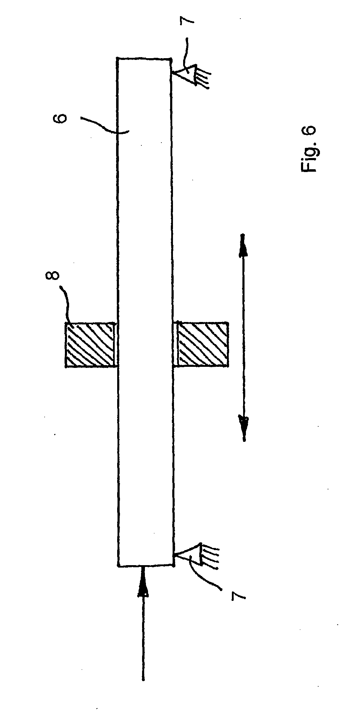

Die Fig. 6 zeigt eine Führungsschiene 6 mit einem kreisförmigen Querschnitt, die auf zwei Stützstellen 7 abgestützt ist. Ein Schlitten 8 ist in Richtung des Doppelpfeils verschiebbar. Die Führungsschiene 6 wird einseitig mittels eines Ultraschallschwingers zum Schwingen angeregt, was mit dem Pfeil symbolisiert ist. Dabei bildet sich ein Squeezefilmlager aus, sodass der Schlitten 8 berührungsfrei auf der Führungsschiene 6 gleitet.

Das Material der Achse oder der Schiene kann Metall oder Glas oder jedes andere Material sein, das über die erforderlichen schwingungsmechanischen Eigenschaften verfügt.

Dem Fachmann ist klar, dass diese technische Lehre alle kinematischen Umkehrungen erfasst, wie z. B. eine axial angeregte schwingende Hohlachse, in der eine Welle gelagert wird.

## Patentansprüche

1. Lagerkonstruktion mit einer Achse **(4),** auf welcher ein Rotor **(5)** um die Achse **(4)** drehbar angeordnet ist und ein Ultraschallschwinger **(1)** zur Erzeugung eines Luft- oder Gasfilms vorgesehen ist, sodass ein berührungsloses Lager ausgebildet ist, wobei
- der Ultraschallschwinger **(1)** axial an der Achse **(4)** angekoppelt ist,
- die Lagerkonstruktion und der Ultraschallschwinger **(1)** so ausgebildet sind, dass wenigstens der tragende Abschnitt der Achse, auf welchem der Rotor dreht, schwingt, sodass sich zwischen der Rotor-Lagerfläche und der Achsenlagerfläche der Luft- oder Gasfilm ausbildet, der die Lagerkräfte aufnimmt und die berührungslose Lagerung bewirkt, und
- die Achse **(4)** hohl ist und eine Bohrung **(9)** mit unterschiedlichen und/oder abgestuften Innendurchmessern aufweist.

2. Lagerkonstruktion nach Anspruch 1, wobei die Achse **(4)** geschlitzt ist.

3. Lagerkonstruktion nach Anspruch 1, wobei die Achse zylindrisch ausgebildet ist.

4. Lagerkonstruktion nach Anspruch 1, wobei die Achse kegelförmig ausgebildet ist.

5. Lagerkonstruktion nach Anspruch 3, wobei ein seitlicher Anschlag **(2)** für den Rotor vorgesehen ist, wobei dieser Anschlag ebenfalls schwingt und mit der Seitenfläche des Rotors ein berührungsfreies Lager bildet.

## Claims

1. A bearing construction comprising an axle (4) on which a rotor (5) is rotatably disposed and an ultrasonic transducer (1) for generating an air or gas film is provided, such that a contactless bearing is formed, wherein
- the ultrasonic transducer (1) is axially coupled to the axle (4),
- the bearing construction and the ultrasonic transducer (1) are configured such that at least the load-bearing section of the axle, on which the rotor rotates, oscillates, so that the air or gas film that absorbs the bearing forces and produces the contactless bearing is formed between the rotor bearing surface and the axle bearing surface, and
- the axle (4) is hollow and has a hole (9) having different and/or stepped inner diameters.

2. The bearing construction according to claim 1, wherein the axle (4) is slotted.

3. The bearing construction according to claim 1, wherein the axle is cylindrical in shape.

4. The bearing construction according to claim 1, wherein the axle is coneshaped.

5. The bearing construction according to claim 3, wherein a lateral stop member (2) for the rotor is provided, said stop member likewise oscillating and forming a contactless bearing with the lateral surface of the rotor.

## Revendications

1. Construction de palier comportant un axe (4), sur lequel est disposé un rotor (5) en rotation autour de l'axe (4) et sur lequel est prévu un oscillateur à ultrasons (1) pour générer un film d'air ou de gaz permettant la formation d'un palier sans contact, dans lequel
- l'oscillateur à ultrasons (1) est couplé axialement à l'axe (4),
- la construction de palier et l'oscillateur à ultrasons (1) sont formés de telle sorte qu'au moins la section de support de l'axe, sur laquelle tourne le rotor, vibre afin que se forme le film d'air ou de gaz entre la surface de palier de rotor et la surface de palier d'axe, lequel film recevant les forces de palier et provoquant le logement sans contact, et
- l'axe (4) est creux et comprend un alésage (9) avec des diamètres intérieurs différents et/ou à épaulement.

2. Construction de palier selon la revendication 1, dans laquelle l'axe (4) est fendu.

3. Construction de palier selon la revendication 1, dans laquelle l'axe (4) est de forme cylindrique.

4. Construction de palier selon la revendication 1, dans laquelle l'axe (4) est de forme conique.

5. Construction de palier selon la revendication 3, dans laquelle est prévue une butée latérale (2) pour le rotor, laquelle vibre également et forme avec la surface latérale du rotor un palier sans contact.
